# EUROPEAN PATENT SPECIFICATION

(11) **EP 4 101 618 B1**
(45) Date of publication and mention of the grant of the patent: **29.10.2025**
(21) Application number: 20917705.4
(22) Date of filing: 25.12.2020
(51) Int. Cl.: B29C 45/14, F16J 15/10, H01M 8/0271, H01M 8/0273, H01M 8/0276, H01M 8/0284, H01M 8/0286

(54) **GASKET WITH INTEGRATED SEPARATOR, AND MANUFACTURING METHOD THEREOF**
DICHTUNG MIT INTEGRIERTEM SEPARATOR UND HERSTELLUNGSVERFAHREN DAFÜR
JOINT D'ÉTANCHÉITÉ AVEC SÉPARATEUR INTÉGRÉ, ET SON PROCÉDÉ DE FABRICATION

(30) Priority: 06.02.2020 JP 2020018626; 20.08.2020 JP 2020139437
(43) Date of publication of application: 14.12.2022
(73) Proprietor: NOK Corporation, Minato-ku, Tokyo 105-8585 (JP)
(72) Inventor: SHIRAKAWA, Sohei, Fujisawa-shi, Kanagawa 251-0042 (JP); OBA, Kenichi, Fujisawa-shi, Kanagawa 251-0042 (JP)
(74) Representative: TBK
(86) International application number: PCT/JP2020/048735
(87) International publication number: WO 2021/157252

(56) References cited:
- EP-A1- 2 851 986
- EP-A1- 3 457 003
- JP-A- 2005 123 108
- JP-A- 2006 032 075
- JP-A- 2006 032 075
- JP-A- 2006 054 121
- JP-A- 2008 091 110
- JP-A- 2013 202 825
- JP-A- 2017 027 663
- JP-A- 2019 190 604
- JP-A- H0 911 246
- US-A1- 2008 206 622
- US-A1- 2010 047 650
- US-B2- 10 465 798

## Description

### [Technical Field]

The present disclosure relates to a separator-integrated gasket provided on a separator forming a fuel cell, and a manufacturing method therefor.

### [Background Art]

In a well-known, conventional technique, a gasket formed from an elastic body made of rubber or the like is integrally molded with a separator forming a fuel cell. When carbon is used as the material of the separator, the gasket is to be integrally molded with the separator after coating the surface of the separator with an adhesive, thus leading to an increase in the number of manufacturing steps. Moreover, the separator and the gasket have widely differing thermal expansion coefficients, and therefore an issue arises in that in a high-temperature environment, the gasket is more likely to peel away from the separator. A further issue exists in that when the gasket peels away from the separator, the gasket cannot be reused.

### [Citation List]

### [Patent Literature]

[PTL 1]
   Japanese Patent Application Publication No. 2019-114326
[PTL 2]
   Japanese Patent Application Publication No. 2012-21640
[PTL 3]
   Japanese Patent Application Publication No. 2009-193687
[PTL 4]
   Japanese Patent Application Publication No. 2008-177001
[PTL 5]
   WO 2018/123807
Document EP 2 851 986 A1 is considered closest prior art and discloses the features of the preambles of the independent claims 1, 2 and 3.
Document EP 3 457 003 A1 discloses a separator where a gasket is fixed by means of a form fit.

### [Summary of Invention]

### [Technical Problem]

The object of the present disclosure is to provide a separator-integrated gasket and a manufacturing method therefor, with which the likelihood of the gasket peeling away from the separator can be reduced while reducing the number of manufacturing steps.

### [Solution to Problem]

The object of the invention is achieved by a separator-integrated gasket according to claim 1 or claim 2 and by a method according to claim 3.

The present invention employs the following means to solve the issues described above.

A separator-integrated gasket according to the present invention is a separator-integrated gasket including a gasket that is provided integrally with a separator forming a fuel cell,
wherein the separator is formed from carbon to which a thermoplastic first resin material has been added, and
the gasket is formed from a thermoplastic second resin material that is compatible with the first resin material.

According to the present invention, the gasket is formed from the thermoplastic second resin material, which is compatible with the first resin material added to the material of the separator. Therefore, by directly molding the gasket integrally with the separator, the first resin material and the second resin material melt, intermix, and then harden. As a result, the gasket can be provided integrally with the separator without using an adhesive. Moreover, peeling due to a difference between the thermal expansion coefficients is unlikely to occur.

Further, a separator-integrated gasket according to another invention is a separator-integrated gasket including a gasket that is provided integrally with a separator forming a fuel cell,
wherein the separator is formed from carbon to which a thermoplastic first resin material has been added, and
the gasket is formed from a mixed material of a rubber material and a thermoplastic second resin material that is compatible with the first resin material.

According to this configuration, similar effects to those of the configuration described above can be achieved. Moreover, in this configuration, the gasket expands and contracts easily, and therefore deformation of the separator due to thermal contraction of the gasket can be suppressed. Furthermore, a stable sealing function is achieved regardless of variation in a gap formed in a part where the gasket is disposed.

A plurality of uneven parts are formed in a portion of the separator to which the gasket is welded.

In so doing, the surface area of the welded portion between the separator and the gasket can be enlarged, enabling an increase in fixing force.

Further, a manufacturing method for a separator-integrated gasket according to the present invention is a manufacturing method for a separator-integrated gasket forming a fuel cell, the method including:
a step for attaching, to an injection molding die, a separator formed from a carbon material to which a thermoplastic first resin material has been added; and
a step for integrally molding a gasket with the separator using a thermoplastic second resin material that is compatible with the first resin material.

Or, a manufacturing method for a separator-integrated gasket according to the invention is a manufacturing method for a separator-integrated gasket forming a fuel cell, the method including:
a step for attaching, to an injection molding die, a separator formed from a carbon material to which a thermoplastic first resin material has been added; and
a step for integrally molding a gasket with the separator using a mixed material of a rubber material and a thermoplastic second resin material that is compatible with the first resin material.

Here, the gasket is integrally molded on a surface of a plurality of uneven parts formed in advance on a surface of the separator.

### [Advantageous Effects of Invention]

According to the present invention, as described above, the likelihood of the gasket peeling away from the separator can be reduced while reducing the number of manufacturing steps.

### [Brief Description of Drawings]

[Fig. 1]

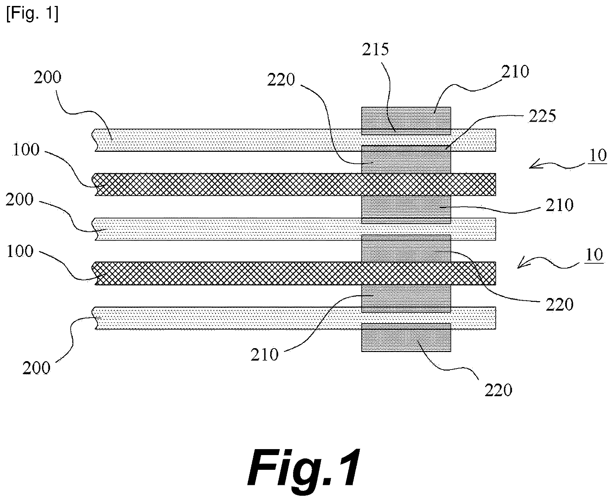

   Fig. 1 is a sectional view showing a part of a fuel cell according to a first embodiment of the present invention.
[Fig. 2]

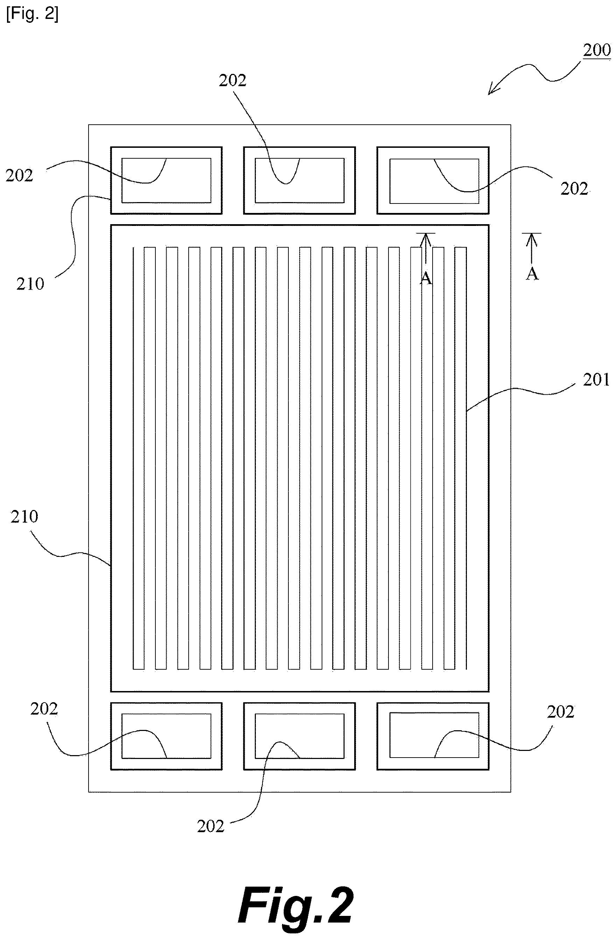

   Fig. 2 is a plan view of a separator-integrated gasket according to the first embodiment of the present invention.
[Fig. 3]

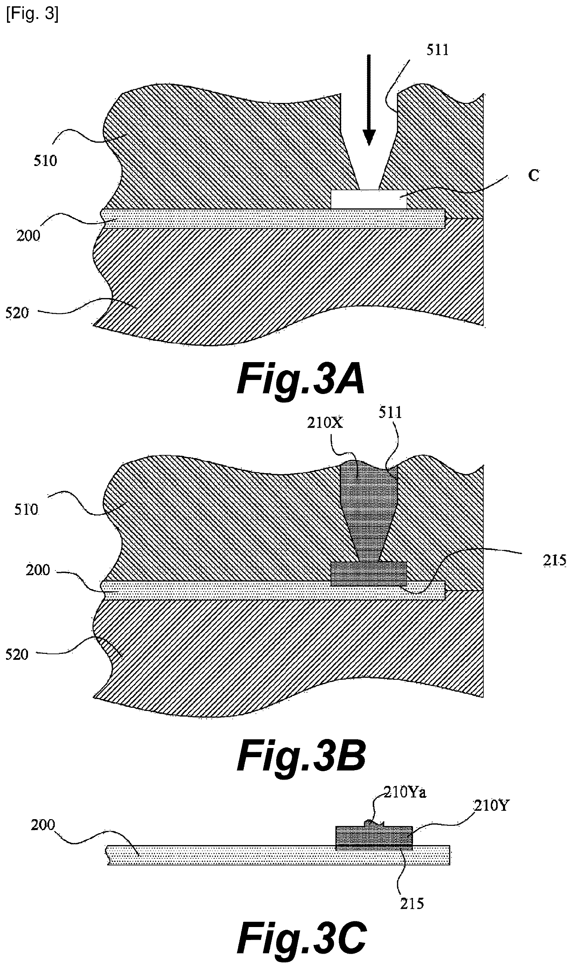

   Fig. 3 is a view showing a process for manufacturing the separator-integrated gasket according to the first embodiment of the present invention.
[Fig. 4]

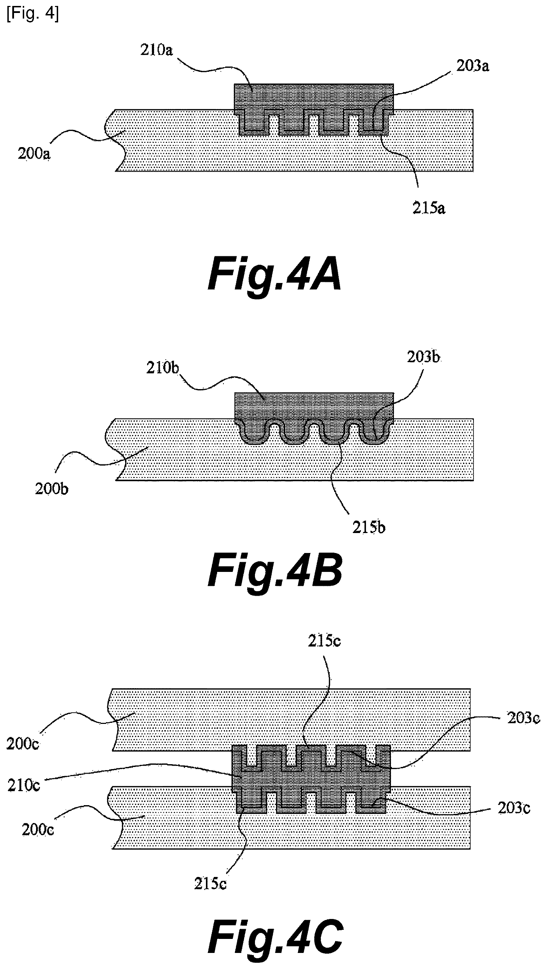

   Fig. 4 is a sectional view showing various modified examples of the separator-integrated gasket according to the first embodiment of the present invention.
[Fig. 5]

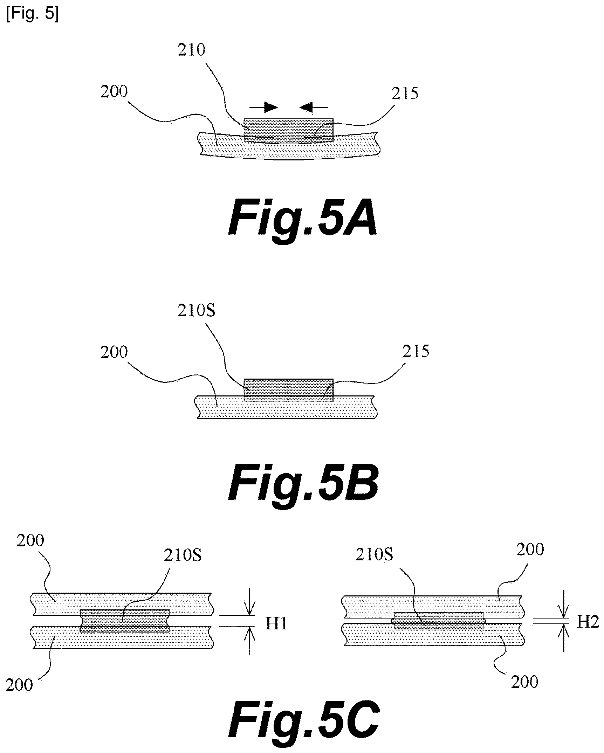

   Fig. 5 is an illustrative view of a separator-integrated gasket according to a second embodiment of the present invention.

### [Description of Embodiments]

The present invention will be described in detail below on the basis of exemplary embodiments with reference to the figures. Note, however, that unless specified otherwise, the scope of the invention is not limited only to the dimensions, materials, shapes, relative arrangements, and so on of the constituent components described in the following embodiments.

### First Embodiment

A separator-integrated gasket and a manufacturing method therefor according to a first embodiment of the present invention will be described with reference to Figs. 1 to 3. Fig. 1 is a sectional view showing a part of a fuel cell according to the first embodiment of the present invention and a sectional view showing a part of the fuel cell schematically. Fig. 2 is a plan view of a separator-integrated gasket according to the first embodiment of the present invention. Note that on the sectional view of Fig. 1, the sectional view of a separator corresponds to an AA sectional view in Fig. 2. Fig. 3 is a view showing a process for manufacturing the separator-integrated gasket according to the first embodiment of the present invention.

### Fuel cell

A fuel cell that includes the separator according to this embodiment will be described with reference to Figs. 1 and 2. A fuel cell is typically formed as a cell stack constituted by a plurality of single cells. Fig. 1 is a schematic sectional view showing a part of a cell stack constituted by a plurality of single cells. As shown in Fig. 1, the cell stack is configured such that an MEA (Membrane Electrode Assembly) 100 and a separator 200 are stacked alternately. A single cell 10 is formed from the MEA 100 and the pair of separators 200 provided on respective surfaces of the MEA 100. Note that in locations of the cell stack where a coolant flows, the separators 200 may be provided adjacent to each other rather than via the MEA 100.

The MEA 100 includes an electrolyte membrane and a pair of gas diffusion layers provided on respective surfaces of the electrolyte membrane. Further, a flow passage 201 through which fuel gas, oxidant gas, coolant, and so on flows is formed in the separator 200.

Elastic gaskets 210, 220 are provided between the MEA 100 and the separators 200 to prevent leakage of the fuel gas, oxidant gas, coolant, and so on. In this embodiment, the gaskets 210, 220 are provided integrally with the separator 200. Hence, a member in which the gaskets 210, 220 are provided integrally with the separator 200 will be referred to as a "separator-integrated gasket".

### Separator

Referring to Figs. 1 and 2, the separator 200 provided in the fuel cell will be described in further detail. The separator 200 is provided with the flow passage 201, which is formed in the surface of the separator 200, and a plurality of manifolds 202. The separator 200 according to this embodiment is formed from carbon to which a thermoplastic first resin material has been added. Note that carbon is generally a brittle material and is therefore disadvantaged in being brittle, but by adding the first resin material to the carbon, it is possible to compensate for this disadvantage.

The flow passage 201 is used as a flow passage through which fuel gas, oxidant gas, coolant, and so on flow. Further, the manifolds 202 are provided to distribute the fuel gas, oxidant gas, coolant, and so on to the respective cells. To prevent the fuel gas and so on from leaking to the outside or the like, the gaskets 210, 220 are provided integrally with the separator 200 on the periphery of a region in which the flow passage 201 is formed and on the periphery of the manifolds 202, respectively. Note that in Fig. 2, sites in which the gasket 210 is provided are indicated by thick lines. The gaskets 210, 220 according to this embodiment are formed from a thermoplastic second resin material that is compatible with the first resin material. PP (polypropylene) and PE (polyethylene) may be cited as examples of the first resin material and the second resin material. Note that PP and PE are compatible.

### Manufacturing method for separator-integrated gasket

Referring in particular to Fig. 3, a method for manufacturing the separator-integrated gasket according to this embodiment will be described. In the separator-integrated gasket according to this embodiment, the gaskets 210, 220 are molded integrally with the separator 200 by injection molding. A die (an injection molding die) used for the injection molding according to this embodiment includes an upper die 510 and a lower die 520. The upper die 510 is provided with a gate 511 for injecting resin material (the second resin material) into a cavity C.

First, the separator 200 is attached to the injection molding die (see Fig. 3A). A second resin material 210X is then injected through the gate 511 (injected in the direction of an arrow in Fig. 3A).

Thus, since the first resin material, which is added to the carbon material forming the separator 200, and the second resin material 210X are compatible, a part of the first resin material near the surface of the separator 200 melts such that the first resin material and the second resin material 210X are evenly intermixed (see Fig. 3B). Note that the temperature of the second resin material 210X in a molten state after being injected through the gate 511 during the injection molding is approximately 180°C to 220°C. When the temperature subsequently decreases, the intermixed first resin material and second resin material 210X harden. Note that a reference numeral 215 in Figs. 1 and 3 denotes a part where the first resin material and the second resin material 210X are intermixed. Hereafter, this part will be referred to as a welded portion 215. Note that Fig. 1 also shows a welded portion 225 of the gasket 220.

Next, the separator 200 is extracted from the die. A gate trace 210Ya remains on the gasket 210Y molded integrally with the separator 200 (see Fig. 3C). Therefore, post-processing or the like is preferably performed to remove the gate trace 210Ya. By performing this post-processing, a separator-integrated gasket in which the gasket 210 having a planar surface is integrated with the separator 200 is obtained.

Note that in the above description, a manufacturing process in a case where the gasket 210 is provided integrally on one surface of the separator 200 was described. However, by also providing a gate in the lower die 520, the gasket 210 and the gasket 220 can be integrally molded with the separator 200 simultaneously.

Advantages of separator-integrated gasket and manufacturing method therefor according to this embodiment

With the separator-integrated gasket and the manufacturing method therefor according to this embodiment, the gaskets 210, 220 are formed from the thermoplastic second resin material, which is compatible with the first resin material added to the material of the separator 200. Therefore, by directly molding the gaskets 210, 220 integrally with the separator 200, the first resin material and the second resin material melt, intermix, and then harden. **In** other words, the gaskets 210, 220 are fixed integrally to the separator 200 by the welded portions 215, 225 in which the first resin material and the second resin material are intermixed. Hence, the gaskets 210, 220 can be provided integrally with the separator 200 without using an adhesive. Accordingly, a process for applying an adhesive is not required. Note that as long as the first resin material and the second resin material are compatible, the first and second resin materials may be the same material or different materials.

Further, since the first resin material and the second resin material do not have widely differing thermal expansion coefficients, situations in which the gaskets 210, 220 peel away from the separator 200 due to a difference between thermal expansion coefficients thereof can be suppressed. Furthermore, since the gaskets 210, 220 are formed from thermoplastic resin material, even if the gaskets 210, 220 peel away from the separator 200, the gaskets 210, 220 can be reheated and welded to the separator 200 and are therefore reusable.

### (Miscellaneous)

Referring to Fig. 4, various modified examples of the separator-integrated gasket according to this embodiment will be described. Fig. 4 is a schematic sectional view showing various modified examples of the separator-integrated gasket according to the first embodiment of the present invention.

Even when the parts of the surfaces of the separator 200 to which the gaskets 210, 220 are to be welded are planar, since the gaskets 210, 220 are fixed by the welded portions 215, 225 in which the first resin material and the second resin material are intermixed, as described above, it is possible to acquire a fixing force with a certain degree of strength. Depending on the use environment and so on, however, an increased fixing force may be used. In this case, uneven parts may be formed in advance in the sites of the surface of the separator 200 to which the gaskets 210, 220 are to be welded.

For example, Fig. 4A is a sectional view showing a separator-integrated gasket acquired by providing a plurality of uneven parts 203a having a rectangular cross-section on the surface of a separator 200a and molding a gasket 210a integrally with the portion where the uneven parts 203a are formed. In this case, a welded portion 215a is formed along the uneven parts 203a, enabling an increase in the surface area of the welded portion 215a between the separator 200a and the gasket 210a, and as a result, the fixing force can be increased.

Alternatively, Fig. 4B is a sectional view showing a separator-integrated gasket acquired by providing a plurality of uneven parts 203b having a substantially arc-shaped cross-section on the surface of a separator 200b and molding a gasket 210b integrally with the uneven parts 203b. Likewise in this case, a welded portion 215b is formed along the uneven parts 203b, enabling an increase in the surface area of the welded portion 215b between the separator 200b and the gasket 210b, and as a result, the fixing force can be increased.

As described above, the cell stack may have locations, in a region where the coolant flows, where the separators are provided adjacent to each other rather than via the MEA. Likewise in this case, a gasket is to be provided between the separators to prevent the coolant from leaking. In this case, a single gasket may be provided integrally with a pair of separators.

For example, Fig. 4C is a sectional view showing a separator-integrated gasket in which a single gasket 210c is provided integrally with a pair of separators 200c. Likewise in this separator-integrated gasket, a plurality of uneven parts 203c may be provided on each of the separators 200c, and the gasket 210c may be provided integrally with the uneven parts 203c. Thus, welded portions 215c are formed along the uneven parts 203c, enabling an increase in the surface area of the welded portions 215c between the separators 200c and the gasket 210c, and as a result, the fixing force can be increased.

### Second Embodiment

Fig. 5 shows a second embodiment of the present invention. In this embodiment, a configuration in which the material of the gasket differs from the first embodiment will be illustrated. All other basic configurations and actions are identical to the first embodiment, and therefore identical constituent parts have been allocated identical reference symbols, and description thereof has been omitted as appropriate.

Fig. 5 is an illustrative view of a separator-integrated gasket according to the second embodiment of the present invention. Fig. 5A is a partially enlarged sectional view of the configuration of the first embodiment, described above. Fig. 5B is a partially enlarged sectional view of the separator-integrated gasket according to the second embodiment of the present invention. Fig. 5C is a sectional view showing an action of the separator-integrated gasket according to the second embodiment of the present invention.

Similarly to the first embodiment the gasket 210 formed from the second resin material and the separator 200 formed mainly from carbon have different thermal expansion coefficients. Therefore, when the temperatures of the separator 200 and the gasket 210 decrease after the gasket 210 is molded integrally with the separator 200, the gasket 210 contracts by a larger amount than the separator 200. Hence, due to the contraction of the gasket 210 (see the arrows in Fig. 5A), a force for causing the separator 200 to contract acts on the separator 200. As a result, depending on the dimensions, shapes, and so on of the separator 200 and the gasket 210, a part of the separator 200 may deform so as to become bent.

In this embodiment, a separator-integrated gasket with which this defect can be prevented from occurring will be described. As shown in Fig. 5B, the separator-integrated gasket according to this embodiment, similarly to the first embodiment, has the separator 200 and a gasket 210S. Further, the separator 200 and the gasket 210S are fixed integrally by the welded portion 215. Note that the configuration of the separator 200 is similar to the first embodiment, and therefore description thereof has been omitted.

This embodiment differs from the first embodiment in that the material of the gasket 210S is constituted by a mixed material of a rubber material and the thermoplastic second resin material that is compatible with the first resin material. PP (polypropylene) and PE (polyethylene) may be cited as examples of the first resin material and the second resin material. Further, EPDM may be cited as an example of the rubber material. Note that a molding material can be obtained by kneading a material formed by dry-blending the second resin material and the rubber material at a desired ratio in a biaxial extrusion kneader. Note that when the gasket 210S is integrally molded with the separator 200 by injection molding, the kneaded molding material described above may be used in pellet form.

As described above, this embodiment differs from the first embodiment only in the material of the gasket 210S. A manufacturing method for the separator-integrated gasket according to this embodiment is also similar to the first embodiment, and therefore description thereof has been omitted.

With the separator-integrated gasket and the manufacturing method therefor according to this embodiment, similar effects to those of the first embodiment can be acquired. Moreover, in this embodiment, the material of the gasket 210S is constituted by a mixed material of the second resin material and a rubber material. Therefore, the gasket 210S expands and contracts more easily than the gasket 210 of the first embodiment. Accordingly, deformation of the separator 200 due to thermal contraction of the gasket 210S can be suppressed. Furthermore, a stable sealing function can be achieved regardless of variation in a gap formed in the part where the gasket 210S is disposed. More specifically, as shown in Fig. 5C, for example, in a case where the gasket 210S is disposed between the pair of separators 200, even when the gap between the separators widens or narrows, a stable sealing function is realized by the expansion and contraction of the gasket 210S. Note that the left side of the figure shows a state in which the gap is wide, and the right side of the figure shows a state in which the gap is narrow (H1 > H2).

The gasket 210S illustrated in this embodiment can also be applied to the various modified examples shown in Fig. 4.

### [Reference Signs List]

10 Single cell
200, 200a, 200b, 200c Separator
201 Flow passage
202 Manifold
203a, 203b, 203c Uneven parts
210, 220, 210a, 210b, 210c, 210S Gasket
210Y Gasket
210Ya Gate trace
215, 225, 215a, 215b, 215c Welded portion
510 Upper die
511 Gate
520 Lower die
C Cavity

## Claims

1. A separator-integrated gasket comprising a gasket (210, 220, 210a, 210b, 210c) that is provided integrally with a separator (200, 200a, 200b, 200c) forming a fuel cell (10),
wherein the separator (200, 200a, 200b, 200c) is formed from carbon to which a thermoplastic first resin material has been added, and
the gasket (210, 220, 210a, 210b, 210c) is formed from a thermoplastic second resin material that is compatible with the first resin material,
**characterized in that**
a plurality of uneven parts (203a, 203b, 203c) are formed in a portion of the separator (200) to which the gasket is welded.

2. A separator-integrated gasket comprising a gasket (210S) that is provided integrally with a separator (200) forming a fuel cell (10),
wherein the separator (200) is formed from carbon to which a thermoplastic first resin material has been added, and
the gasket (210S) is formed from a mixed material of a rubber material and a thermoplastic second resin material that is compatible with the first resin material,
**characterized in that**
a plurality of uneven parts (203a, 203b, 203c) are formed in a portion of the separator (200) to which the gasket is welded.

3. A manufacturing method for a separator-integrated gasket forming a fuel cell (10), the method comprising:
a step for attaching, to an injection molding die (510, 520), a separator formed (200) from a carbon material to which a thermoplastic first resin material has been added; and
a step for integrally molding a gasket (210, 220, 210a, 210b, 210c) with the separator using a thermoplastic second resin material that is compatible with the first resin material or using a mixed material of a rubber material and a thermoplastic second resin material that is compatible with the first resin material,
**characterized in that**
the gasket (210a, 210b, 210c) is integrally molded on a surface of a plurality of uneven parts (203a, 203b, 203c) formed in advance on a surface of the separator (200).

## Patentansprüche

1. In einen Separator (200, 200a, 200b, 200c) integrierte Dichtung, mit einer Dichtung (210, 220, 210a, 210b, 210c), die einstückig mit einem Separator (200, 200a, 200b, 200c) ausgebildet ist, der eine Brennstoffzelle (10) ausbildet,
wobei der Separator (200, 200a, 200b, 200c) aus Kohlenstoff ausgebildet ist, dem ein thermoplastisches erstes Harzmaterial hinzugefügt wurde, und
die Dichtung (210, 220, 210a, 210b, 210c) aus einem thermoplastischen zweiten Harzmaterial ausgebildet ist, das mit dem ersten Harzmaterial kompatibel ist,
**dadurch gekennzeichnet, dass**
eine Vielzahl von unebenen Teilen (203a, 203b, 203c) in einem Abschnitt des Separators (200) ausgebildet sind, an den die Dichtung geschweißt ist.

2. In einen Separator (200) integrierte Dichtung, mit einer Dichtung (210S), die einstückig mit einem Separator (200) ausgebildet ist, der eine Brennstoffzelle (10) bildet,
wobei der Separator (200) aus Kohlenstoff ausgebildet ist, dem ein thermoplastisches erstes Harzmaterial hinzugefügt wurde, und
die Dichtung (210S) aus einem Mischmaterial aus einem Kautschukmaterial und einem thermoplastischen zweiten Harzmaterial ausgebildet ist, das mit dem ersten Harzmaterial kompatibel ist,
**dadurch gekennzeichnet, dass**
eine Vielzahl von unebenen Teilen (203a, 203b, 203c) in einem Abschnitt des Separators (200) ausgebildet sind, an den die Dichtung geschweißt ist.

3. Verfahren zur Herstellung einer in einen Separator integrierten Dichtung, die eine Brennstoffzelle (10) ausbildet, wobei das Verfahren hat:
einen Schritt zum Anbringen eines Separators (200), der aus einem Kohlenstoffmaterial gebildet ist, dem ein thermoplastisches erstes Harzmaterial hinzugefügt wurde, an einer Spritzgussform (510, 520); und
einen Schritt zum einstückigen Formen einer Dichtung (210, 220, 210a, 210b, 210c) mit dem Separator unter Verwendung eines thermoplastischen zweiten Harzmaterials, das mit dem ersten Harzmaterial kompatibel ist, oder unter Verwendung eines Mischmaterials aus einem Kautschukmaterial und einem thermoplastischen zweiten Harzmaterial, das mit dem ersten Harzmaterial kompatibel ist,
**dadurch gekennzeichnet, dass**
die Dichtung (210a, 210b, 210c) einstückig auf einer Oberfläche einer Vielzahl von zuvor auf einer Oberfläche des Separators (200) ausgebildeten unebenen Teilen (203a, 203b, 210c) geformt ist.

## Revendications

1. Joint d'étanchéité à séparateur intégré comprenant un joint d'étanchéité (210, 220, 210a, 210b, 210c) qui est fourni de manière intégrée à un séparateur (200, 200a, 200b, 200c) formant une pile à combustible (10),
le séparateur (200, 200a, 200b, 200c) étant formé à partir de carbone auquel un premier matériau de résine thermoplastique a été ajouté, et
le joint d'étanchéité (210, 220, 210a, 210b, 210c) étant formé d'un second matériau de résine thermoplastique compatible avec le premier matériau de résine,
**caractérisé en ce que**
une pluralité de parties irrégulières (203a, 203b, 203c) sont formées dans une partie du séparateur (200) à laquelle le joint d'étanchéité est soudé.

2. Joint d'étanchéité à séparateur intégré comprenant un joint d'étanchéité (210S) qui est fourni de manière intégrée à un séparateur (200) formant une pile à combustible (10),
le séparateur (200) étant formé à partir de carbone auquel un premier matériau de résine thermoplastique a été ajouté, et
le joint d'étanchéité (210S) étant formé d'un mélange d'un matériau de caoutchouc et d'un second matériau de résine thermoplastique compatible avec le premier matériau de résine,
**caractérisé en ce que**
une pluralité de parties irrégulières (203a, 203b, 203c) sont formées dans une partie du séparateur (200) à laquelle le joint d'étanchéité est soudé.

3. Procédé de fabrication d'un joint d'étanchéité à séparateur intégré formant une pile à combustible (10), le procédé comprenant :
une étape de fixation, à une matrice de moulage par injection (510, 520), d'un séparateur formé (200) à partir d'un matériau carboné auquel a été ajouté un premier matériau de résine thermoplastique ; et
une étape de moulage intégré d'un joint d'étanchéité (210, 220, 210a, 210b, 210c) avec le séparateur en utilisant un second matériau de résine thermoplastique compatible avec le premier matériau de résine ou en utilisant un mélange de caoutchouc et de second matériau de résine thermoplastique compatible avec le premier matériau de résine,
**caractérisé en ce que**
le joint d'étanchéité (210a, 210b, 210c) est moulé de manière intégrée sur une surface d'une pluralité de parties irrégulières (203a, 203b, 203c) formées à l'avance sur une surface du séparateur (200).
